Europäisches Patentamt

European Patent Office

Office européen des brevets

(11) Publication number: **0 503 391 A1**

# EUROPEAN PATENT APPLICATION

(21) Application number: **92103399.9**

(22) Date of filing: **27.02.92**

(51) Int. Cl.5: **G03C 11/02, G03B 17/24**

(30) Priority: **28.02.91 JP 34242/91**

(43) Date of publication of application:
**16.09.92 Bulletin 92/38**

(84) Designated Contracting States:
**DE FR GB**

(71) Applicant: **FUJI PHOTO FILM CO., LTD.**
**210 Nakanuma Minami Ashigara-shi**
**Kanagawa(JP)**

(72) Inventor: **Kitagawa, Kuniharu, c/o Fuji Photo**
**Film Co., Ltd.**
**No. 210 Nakanuma**
**Minami Ashigara-shi, Kanagawa-ken(JP)**

(74) Representative: **Patentanwälte Grünecker,**
**Kinkeldey, Stockmair & Partner**
**Maximilianstrasse 58**
**W-8000 München 22(DE)**

(54) **Photographic film and information i/o system.**

(57) An information I/O system for specifying a photographic film or an image recorded on the film is provided. The photographic film is provided with a transparent magnetic recording layer allowing data to be magnetically recorded, and the information is represented in eight-bit ASCII code per character. Since the ASCII code can be compatible with the recording code used in general-purpose electronic apparatus such as a personal computer or an electronic pocket notebook, writing onto and reading from the film can be conducted easily without using a converter. Therefore, management of the photographic film becomes easier and working efficiency, at the time of printing and so on, is improved.

FIG. I

EP 0 503 391 A1

BACKGROUND OF THE INVENTION

Field of the Invention

The present invention relates to a photographic film on which a photographed image is optically recorded and which has a recording portion for allowing binary coded data to be recorded thereon, a method of recording the coded data onto this photographic film and an information I/O system using this photographic film.

Description of the Related Art

Conventionally, a method of magnetically recording information specifying a particular negative film and an image printed thereon has been proposed in which a transparent magnetic material is applied onto a photographic film and in particular the negative film (see, for example, International Publication No. WO 90/04205). According to this, since the information can be stored corresponding to the image frame, the trouble of retrieving is saved. For example, during photographing by camera, the photographing date, place, conditions and the like can be entered. Further, when the image is printed onto photographic paper in a laboratory, exposure condition and the like may be recorded for each image frame as the image is printed. Consequently, when one reorders prints, if the operator reads this recorded exposure and the like, he can print the image with the same conditions. Here, the above-described information is comprised of binary (0 or 1) digital data. For the data described in the above-described publication, a single character is represented by six bits. Therefore, $2^6$ ( = 64) kinds of characters are available.

However, in commercially available general-purpose personal computers or electronic pocket notebooks, ASCII codes in which one character is expressed by eight bits have been used. In order to enter the information (e. g. photographing date and place) from the personal computer or the electronic notebook, a converter for allowing the data code to be converted from eight bits to six bits becomes necessary. Incidentally, the eight-bit data can represent $2^8$ ( = 256) kinds of characters.

That is, even if a camera has a function to record the information and a user of the camera possesses a personal computer or the like, the data cannot be directly entered from this personal computer, which is devoid of general practicability. In addition, in the laboratory, the information I/O system for each apparatus, which is used in the verification, printing, reprinting, reordering and the like of the delivered negative film, must be made compatible with the above-described six bits data. In this case, a general-purpose personal computer cannot be directly used, and on the contrary, the working efficiency can worsen. In addition, if the converter is provided for each of the above-described apparatuses, then the equipment becomes complicated and efficient work becomes impossible.

SUMMARY OF THE INVENTION

Accordingly, in view of the above-described facts, an object of the present invention is to provide a photographic film in which the compatibility with codes used frequently in order to represent characters in general can be increased, and the general usability can also be improved, a method of recording coded data on this photographic film and an information I/O system using this photographic film.

The photographic film according to the present invention comprises an image portion on which a photographed image is optically recorded and a recording portion which allows binary coded data to be recorded, the data being represented by an eight-bit code per character.

In the above-described photographic film, since the eight-bit code per character, such as the ASCII code, is used as the code of the data which is recorded onto the recording portion of the photographic film, its compatibility with frequently used personal computers or electronic pocket notebooks can be increased, and its general usability can also be improved.

As the recording portion, a transparent magnetic recording layer may be used, and the ASCII code may be used as the eight-bit code. The data can be magnetically recorded by forming the recording portion with the transparent recording layer, which avoids the problem of the image frame being difficult to see because the recording portion is photographically transparent.

In addition, a plurality of tracks running in the longitudinal direction of the film may be provided on this magnetic recording layer. The plurality of tracks may comprise at least one first track, on which necessary information regarding the film is recorded, and at least one second track provided for each image, on which necessary information regarding the image is recorded. The first track may be provided at the front end of the film where no image is recorded, and the second track may be provided at the outer edge portion of each recorded image, as viewed in the widthwise direction of the film. In addition, the length of the second track may be substantially the same as that of the image as viewed in the longitudinal direction of the film. By providing the track for recording the image information for each image, since the information can be recorded corresponding to each image frame, any trouble, such as retrieving and the like, can be eliminated, and it becomes possible to increase the working efficiency. In addition, it is also possible to record the information on the image, as necessary.

The method of recording coded data according to the present invention is a method of recording information regarding the film or the image recorded thereon onto a photographic film. The photographic film comprises a base, an emulsion layer provided on either one surface of the base for optically recording the photographed image, and a recording layer provided on the other surface of the base for allowing the binary coded data to be recorded thereon. The method comprises steps of conveying the film and writing the above-described information represented by the binary data of eight bits per character, while conveying the film. Prior to the writing step, a step of coding the information into the binary data of eight bits per character may also be included.

Therefore, according to the present invention, since the eight-bit code per character, such as the eight-bit ASCII code, is recorded, a frequently used personal computer, an electronic pocket notebook or the like may be used, and their general usability can be improved.

In addition, the recording layer may be made of the transparent magnetic recording layer, and can be provided on the entire surface of the base or only on the portion where no image is recorded. Still further, the coding may be carried out based on the eight-bit ASCII code table by a general purpose electronic apparatus, such as a personal computer or an electronic pocket notebook, without using a converter. By forming the recording portion with the transparent recording layer, the data can be magnetically recorded while, since it is photographically transparent, there is no inconvenience such as the image frame becoming difficult to see. Further, it is also possible to record the information on the image, as necessary.

The information I/O system according to the present invention is a system using a photographic film, on which the photographed image is optically recorded, and comprising a data processing portion provided on the conveying path of the photographic film for carrying out at least one of writing and reading of the data, and an external I/O terminal connected to the data processing portion and which may be connected to the I/O terminal of an electronic apparatus in which the eight-bit code per character is used. The above-described photographic film comprises a recording portion which allows the data coded by the eight-bit code per character to be recorded.

Thus, since the eight-bit code per character is used as the data code, if an electronic apparatus is connected to the external I/O terminal, it is possible to directly enter the data from the external I/O terminal to the data processing portion or emit the data to the electronic apparatus without the data being converted. Consequently, when the data is rewritten or the like, the data can be recorded in advance on the external memory , thereby enabling the prevention of any input error as compared with the direct input.

This information I/O system may be also provided for a photographing camera or a processing apparatus for processing the photographed image, such as a photo printing apparatus. If this system is equipped into the camera, the photographer can input the photographing date or the photographing place, as necessary, or the recorded data may be output to a personal computer or an electronic pocket notebook or the like to manage the data, which may in turn facilitate management of the photographic film. In addition, if the above-described information I/O system is equipped into the processing apparatus, the photographing conditions under which the film was simultaneously printed can be input without converting the data. Further, when the film is additionally printed, it is possible to achieve the same printing conditions by reading this data. Therefore, any other external storage medium, such as a memory card, becomes unnecessary, and working efficiency is improved. In addition, since re-inputting the revised data can be readily carried out at the time of the additional printing, working efficiency can be further improved.

As the recording portion, the transparent magnetic recording layer may be used, and as the eight-bit code, the ASCII code may be used. As the electronic apparatus, a general-purpose personal computer or an electronic pocket notebook may be used.

As described above, the photographic film, the method of recording the coded data onto the photographic film and the information I/O system according to the present invention have an excellent advantage in that the compatibility with the codes frequently used to represent the characters can be improved, and general usability can also be improved.

BRIEF DESCRIPTION OF THE DRAWINGS

Fig. 1 is a plan view of a negative film according to a specific embodiment of the present invention;

Fig. 2 is a cross-sectional view taken along line 2-2 of Fig. 1;

Fig. 3 is a plan view illustrating areas of a track S1 of a magnetic recording layer;

Fig. 4 is a plan view illustrating areas of a track S2 of the magnetic recording layer;

Fig. 5 is a plan view illustrating areas of a track T1 of the magnetic recording layer;

Fig. 6 is a plan view illustrating areas of a track T2 of the magnetic recording layer;

Fig. 7 is a schematic view illustrating a range of each area of each track;

Fig. 8 is an explanatory view illustrating how a character represented by eight-bit ASCII code may be coded; and

Fig. 9 is a system view for recording and playing back the information according to the embodiment of the present invention.

## DETAILED DESCRIPTION OF THE PREFERRED EMBODIMENTS

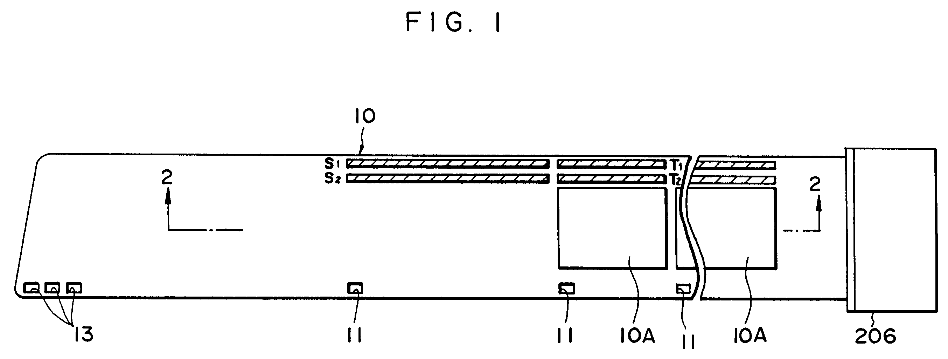

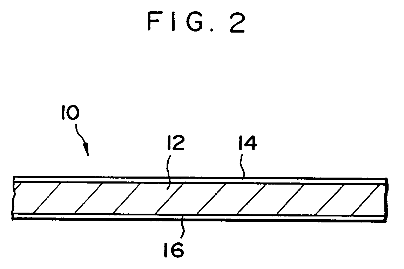

Figs. 1 and 2 illustrate a negative film 10 according to the present invention. As illustrated in Fig. 2, an emulsion layer 14 is provided on the upper surface of a transparent base 12 of the negative film 10 so that an image may be exposed and recorded thereon. In addition, on the lower surface of the transparent base 12 of Fig. 2, a transparent magnetic recording layer 16 is provided including a magnetic material. This magnetic recording layer 16 is formed on the entire surface of the negative film 10. As shown in Fig. 1, at the top end portion of the negative film 10 where an image frame 10A is not recorded, tracks S1 and S2 are formed. At the portion corresponding to the image frame 10A, tracks T1 and T2 are formed. Of course, this magnetic recording layer 16 may be only outside of the range of the image frame 10A of the negative film 10. At the front end portions of these tracks S1 and S2 and at the front end portions of the tracks T1 and T2 corresponding to each image frame 10A, each one perforation 11 is provided. In addition, at the front end portion of the negative film 10, a plurality of perforations 13 is provided to pull the negative film 10 out by engaging with a sprocket (not shown).

The tracks S1 and S2 are each an area for recording the necessary information for a roll of film 10. The tracks T1 and T2 are each an area for recording the necessary information for each image frame 10A.

Each track of the above-described magnetic recording layer 16 is divided into an area where data is input as the negative film 10 is made, an area input by the photographing camera, an area input in a DPE shop, an area input in the laboratory and an area freely input by the user. These areas are hereinafter described in detail.

(Track S1)

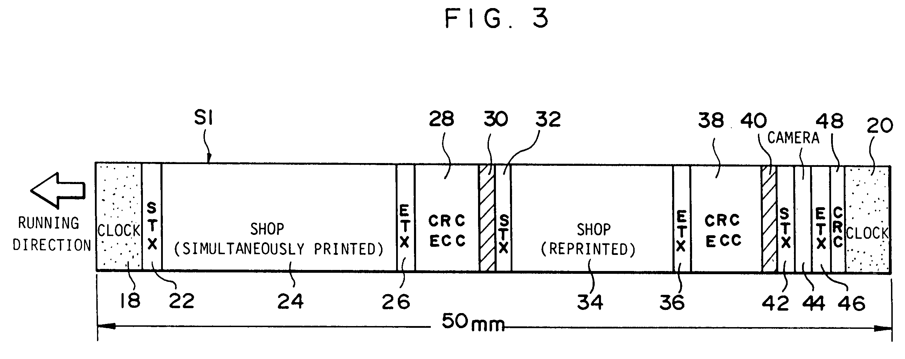

As shown in Fig. 3, the track S1 according to this embodiment is 50 mm in total length. 3mm of its front end and terminal end are clock areas 18 and 20, where clock signals are recorded. The clock signals are used to check the conveying state of the negative film 10, and in particular, its conveying speed. Following the clock area 18, a first STX area 22 where a start signal is recorded, a DPE input area 24 where the information is recorded in the DPE shop where the user requests development of the photographed negative film 10, a first ETX area 26 where an end signal is recorded and a CRC/ECC area 28 where a first error correction signal is recorded are each set. Then, a first blank portion 30 is interposed. In addition, a second STX area 32, a DPE input area 34, a second ETX area 36 and a second CRC ECC area 38 are each set. A second blank portion 40 is then interposed. In addition, a third STX area 42, a camera input area 44, a third ETX area 46 and a third CRC/ECC area 48 are each set so as to continue to the above-described terminal end clock area 20.

(Track S2)

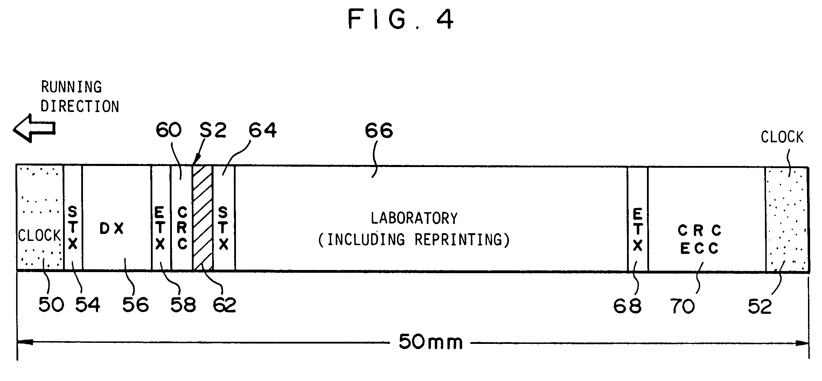

Next, as shown in Fig. 4, the entire length of the track S2 is 50 mm. 3 mm of its front end and terminal end are clock areas 50 and 52, where clock signals are recorded. Following the clock area 50, a first STX are 54, DX area 56 where a DX code is entered, a first ETX area 58 and a first CRC/ECC area 60 are set. Then, a blank portion 62 is interposed. In addition, a second STX area 64, a laboratory input area 66, a second ETX area 68 and a second CRC/ECC area 70 are each set so as to continue to the above-described terminal end clock area 52.

(Track T1)

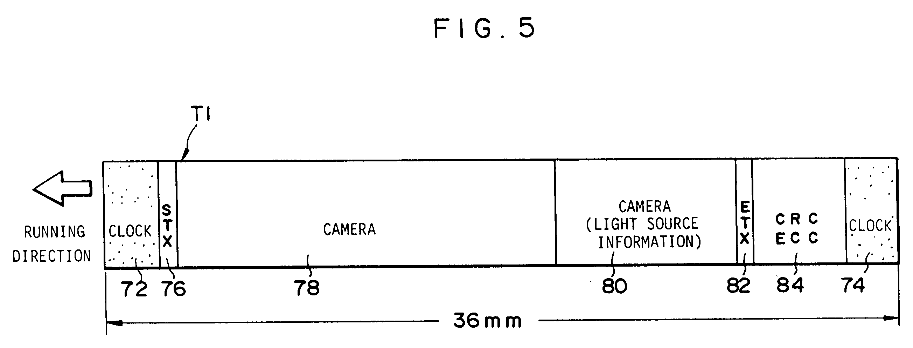

As shown in Fig. 5, the entire length of the track T1 is 36 mm, the same as that of the image frame 10A as viewed in the longitudinal direction. 3 mm at its front end and terminal end are set to clock areas 72 and 74 where clock signals are recorded. Following the clock area 72, an STX area 76, camera input areas 78 and 80, an ETX area 82 and a CRC ECC area 84 are each set so as to continue to the clock area 74 at the above-described terminal end.

(Track T2)

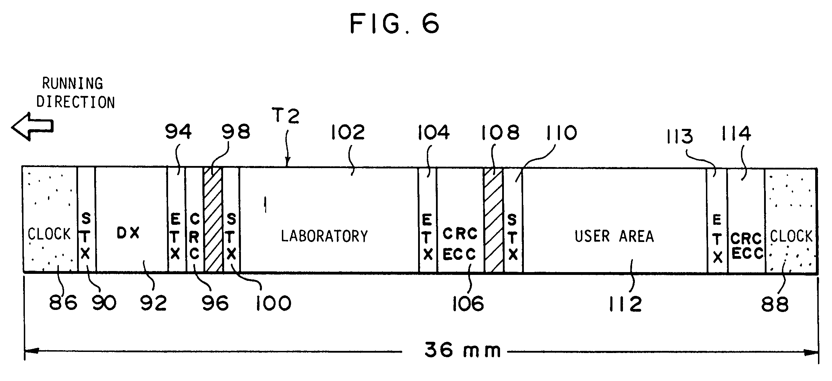

As shown in Fig. 6, the entire length of the track T2 is 36 mm, as is the above-described track T1. 3 mm of the front end and terminal end of track T2 are set to clock areas 86 and 88 where clock signals are recorded. Following the clock area 86, a first STX area 90, a DX area 92, a first ETX area 94 and a first CRC/ECC area 96 are each set. Then, a first blank portion 98 is interposed. In addition, a second STX area 100, a laboratory input area 102, a second ETX area 104 and a second CRC/ECC area 106 are each set. A second blank portion 108 is then interposed. In addition, a third STX area 110, a user input area 112, a third ETX area 113 and a CRC/FCC area 114 are each set so as to continue to the clock area 88 at the above-described terminal end.

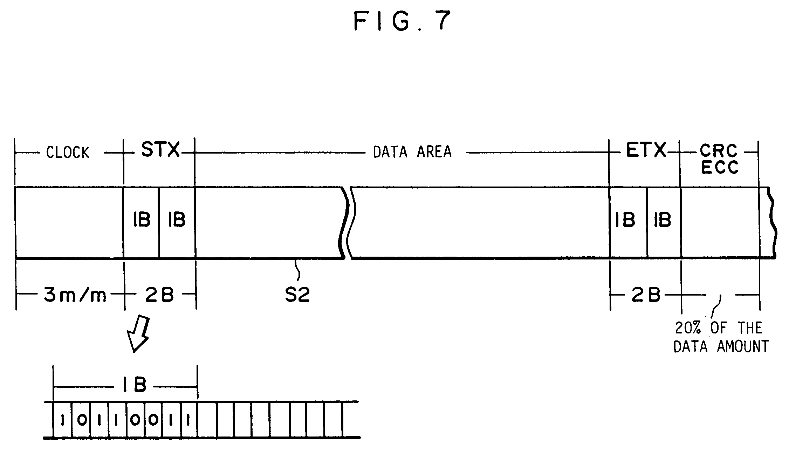

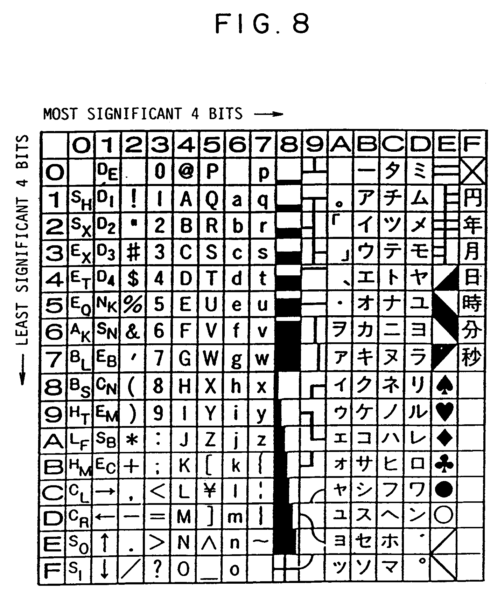

When the information is input to each track of the magnetic recording layer 16, as shown in Fig. 7, one character is represented by binary data, that is, a combination of 1 or 0. The one character is formed according to the ASCII code of eight bits (one byte), and each code is determined based on the character code shown in Fig. 8.

As shown in Fig. 3, for example, the first STX area 22 and the first ETX area 26 for the track S1 are each set to an area where two byte data can be recorded. In addition, the first CRC/ECC area 28 is set to 20 % of the data area (DPE area 24 for the track S1).

At the track S2 of the negative film 10 formed as above, a lot number as shown in Table 1 is binarized and input in advance according to the above-described eight bit ASCII code, in the non-photographed state, that is, at the manufacturing stage. In addition, on the track T1, as shown in Table 1, the ISO sensitivity, the distinction between the negative and positive, the number of films, the name of maker and the frame number are each binarized and entered in advance according to the above-described eight-bit ASCII code.

TABLE 1

| Input Information | Content of Input Information | Input Method | Input Position | |
|---|---|---|---|---|
| | | | Frame | per Film |
| Previously Input onto the film | | | | |
| 1. ISO sensitivity | ISO 25 to 6400 | pre-input | ☆ | |
| 2. Negative/Positive | neg./pos. | " | ☆ | |
| 3. Number of films | 12,24,36 exp. | " | ☆ | |
| 4. Maker | FF, EK etc. | " | ☆ | |
| 5. Frame No. | 1 to 36 | " | ☆ | |
| a. Lot No. | 123456 | " | | ★ |

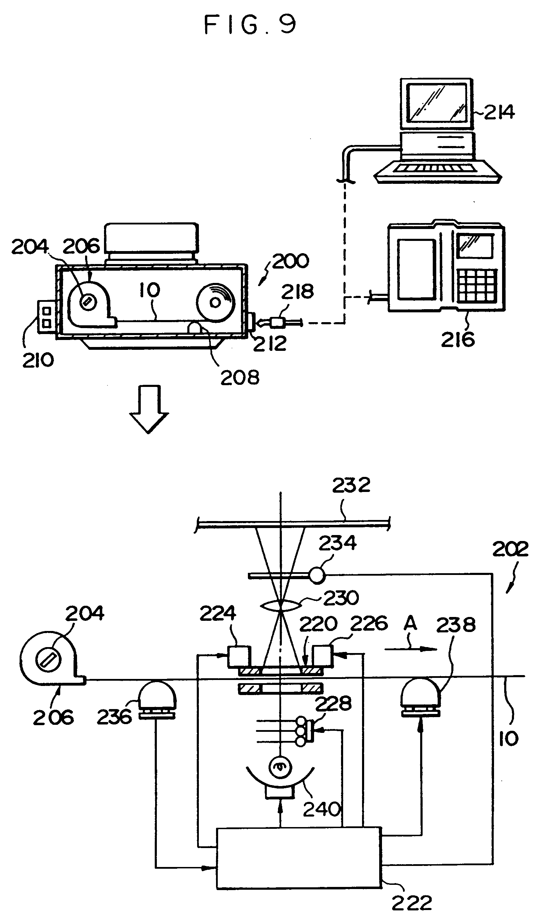

In Figure 9, a camera 200 and a photo printing apparatus 202 according to the present invention are illustrated. Within the camera 200, at its one side, a cartridge 206 is loaded to wind and accommodate the above-described film 10 about a spool 204.

A recording head 208 is provided in the camera 200 so as to correspond to each track of the magnetic recording layer 16 of the negative film 10 so that when the negative film 10 is conveyed, predetermined information regarding the exposed and recorded image may be recorded on the above-described track automatically or by manually operating an operating portion 210 disposed on the camera 200 (see Table 2).

TABLE 2

| Input Information | Content of Input Information | Input Method | Input Position | |
|---|---|---|---|---|
| | | | Frame | per Film |
| **Input by camera** | | | | |
| 6.Date | month, day, 19-- | automatic | ☆ | |
| 7.Time | our, min | " | ☆ | |
| 8.Photographed? | how much was photographed | " | ☆ | |
| 9.PZ magnification, P | 2 X (10 steps) | " | ☆ | |
| 10.Stroboscope | yes or no | " | ☆ | |
| 11.Fluores. lamp | light amount | " | ☆ | |
| 12.Color temp. | color temp. | " | ☆ | |
| 13.Shutter SP | B to 1/5000 | " | ☆ | |
| 14.Focusing | M to ∞ | " | ☆ | |
| 15.F value | | " | ☆ | |
| 16.Orientation of camera | longitudinal or lateral photographing | " | ☆ | |
| b.Type of camera | FUJICA 700 | " | | ★ |
| c.L focal length | 10 to 1000 | " | ☆ | |
| d.Backlight photographing | backlight | " | ☆ | |
| e.O,U photograph | over, under | " | ☆ | |
| f.Prewind | prewind | " | | ★ |
| 17.Number of simult. prints specified | 1 to 16 | manual | ☆ | |
| 18.Title | 10 characters | " | ☆ | |
| g.Key word | 10 characters | " | | ★ |
| h.Auxiliary input | | " | | ★ |
| i.Title | 10 characters | " | | ★ |
| j.Photo. place | 10 characters | " | | ★ |
| k.Photographer | 10 characters | " | | ★ |
| l.Object | 10 characters | " | | ★ |
| m.Serial number | 1 to 1000 | " | | ★ |
| n.Retrieval key word | 10 characters | " | | ★ |

In addition, on the camera 200, an external input terminal 212 electrically connected to the above-described recording head 208 is provided. To this external input terminal 212, a connecting cable 218 can be connected so as to connect the external input terminal 212 to an apparatus such as a personal computer 214 or an electronic pocket notebook 216. Therefore, the user can manually enter information from the personal computer 214 or the electronic pocket notebook 216 or the like.

The film 10 which has been photographed is withdrawn from the camera 200 after being wound again about a cartridge 206, and is brought to a DPE shop. At the DPE shop, the negative film 10 is withdrawn from the cartridge 206 in a dark room and is conveyed to the laboratory after the information shown in Table 3 is input with the eight-bit ASCII code based on the order of the user. In the laboratory, after the negative film 10 is developed, it is placed at a predetermined position of a photo printing apparatus 202.

TABLE 3

| Input Information | Content of Input Information | Input Method | Input Position | |
|---|---|---|---|---|
| | | | Frame | per Film |
| Input in the shop | | | | |
| 19.User ID | XK-123456 | shop machine | | ★ |
| 20.Shop ID | MA-654321 | " | | ★ |
| 21.Type of negative | F, E, K | " | | ★ |
| 22.Print size | E, L, 2L... | " | | ★ |
| 23.Kind of surface | glossy, etc. | " | | ★ |
| 24.Number of photos | each 1 to 8 | " | | ★ |
| 25.Simult/IP/neg. printing | simult/ reprint/ only neg. developing | " | | ★ |
| o.User tel. | oooo-oooo | " | | ★ |
| p.Receipt date | month, day, 19-- | " | | ★ |
| q.Delivery date | month, day, 19-- | " | | ★ |

In the photo printing apparatus 202, a negative carrier 220 is disposed along the optical axis of a light source 240 illuminated during the printing. A driving roller (not shown), which is rotated by the driving force of a driving portion 224 connected to a control unit 222, is disposed at the negative carrier 220 so that the negative film 10 may be conveyed in the direction of arrow A of Fig. 9. In addition, at the negative carrier 220, a solenoid 226 is provided so that the negative film 10 may be sandwiched under pressure in accordance with the signal from the control unit 222.

Between the light source 240 and the negative carrier 220, each filter 228 of CMY is interposed so as to emerge and disappear on the optical axis according to the exposure of each color.

The light beams which have passed through the negative film 10 are illuminated onto photographic paper 232 through a lens 230 so that the image is printed onto the photographic paper 232. Incidentally, between the photographic paper 232 and the lens 230, a shutter 234 is interposed so that it may be retracted from above the optical axis during exposure in accordance with a signal from the control unit 222.

Upstream of the negative carrier 220 along the conveying path of the negative film 10, a read head 236 is disposed so as to read the information recorded on the tracks S1, S2, T1 and T2 shown in Fig. 3, 4, 5 and 6 respectively. At the control unit 222, a memory for recording the information read by the above-described read head 236 is provided.

In addition, downstream of the negative carrier 220, a recording head 238 is disposed so that the information printed by the printing apparatus 202 (shown in Table 4) may be recorded onto the negative film 10 by the eight-bit ASCII code.

TABLE 4

| Input Information | Content of Input Information | Input Method | Input Position | |
|---|---|---|---|---|
| | | | Frame | per Film |
| Entered in the Lab. | | | | |
| r.Reception time | -- o'clock | shop machine | | ★ |
| s.Charge unit | --- yen | " | | ★ |
| t.Method of payment | cash, credit | " | | ★ |
| u.Special specifications | trim, etc. | " | | ★ |
| 26.Name of lab. | FC-13579 | lab. machine | | ★ |
| 27.Printer | FAP-9000 | lab. printer | | ★ |
| 28.Printing conditions | density, color, F | " | ☆ | |
| v.Reception date | month, day, 19-- | lab. machine | | ★ |
| w.Process lot No. | 123 | " | | ★ |
| x.Paper type | A-1234 | " | | ★ |
| y.Process type | CN-41 | " | | ★ |

Further, in the DPE shop, the information shown in Table 5 is also entered onto the negative film 10 developed and finished in the laboratory. In this case, the developed negative film 10 can be worked on in a light room.

TABLE 5

| Input Information | Content of Input Information | Input Method | Input Position | |
|---|---|---|---|---|
| | | | Frame | per Film |
| **Input in the shop or by TV player** | | | | |
| 29.Frame No. | 1 to 36 | shop machine | | ★ |
| 30.Number of photos | 1 to 100 | " | | ★ |
| 31.Print size | E, L, 2L... | " | | ★ |
| 32.Kind of surface | glossy, etc. | " | | ★ |
| z.User ID | XK-123456 | " | | ★ |
| A.Shop ID | MA-654321 | " | | ★ |
| B.User tel No. | 0000-0000 | " | | ★ |
| C.Reception date | month, day, 19-- | " | | ★ |
| D.Delivery date | month, day, 19-- | " | | ★ |
| E.Delivery time | -- o'clock | " | | ★ |
| F.Charge unit | --- yen | " | | ★ |
| G.Method of payment | cash, credit | " | | ★ |
| H.Special Specifications | trim, etc. | " | | ★ |

The operation of this embodiment is hereinafter described.

When an image is photographed by the camera 200, as the negative film 10 is moved, the information ranging from item 6 to item 17 in the above-described Table 2 is recorded onto the camera input area 78 of the track T1, which corresponds to the photographed image frame 10A from the recording head 208. For this information, one character is coded into the binary data of eight bits and recorded based on the eight-bit ASCII code table shown in Fig. 8.

The negative film 10, which is wound again about the spool 204 of the cartridge 206 after the completion of photographing by the camera 200, is brought into the DPE shop by the user. There, the negative film 10 is withdrawn from the cartridge 206 in a dark room, and the information shown in Table 3 is recorded onto the DPE input area 24 of the track S1. Also for this information, one character is coded into binary data of eight bits and recorded based on the eight-bit ASCII code table shown in Fig. 8.

The negative film 10 received by the DPE shop is conveyed to the laboratory to be developed. Subsequently, in the case of a simultaneous printing, it is charged to a predetermined position of the photo printing apparatus 202. If the negative film 10 is pulled out of the loaded cartridge 206 and is conveyed by the driving portion 224 of the negative carrier 220, the information recorded on the magnetic recording layer 16 by the recording head 208 of the above-described camera 200 and the recording unit in the DPE shop, is read out by the read head 236. At this time, since the read data is made uniform by with the eight-bit ASCII code, it is easy to read.

In the laboratory, printing conditions such as the exposure are set based on the read information, and each image frame 10A is sequentially positioned to the printing position for being printed. Here, while the negative film 10 is being conveyed, the information other than item 28 of Table 4 is recorded onto the laboratory input area 66 of the track S2, provided at the front end portion of the negative film 10, by the recording head 238 disposed downstream of the carrier 220. At this time, for this information, one character is coded into eight-bit binary data and recorded in accordance with the eight-bit ASCII code table shown in Fig. 8.

In addition, on the laboratory input area 102 of the track T2 of each image frame 10A, the information regarding item 28 (density correction value, color correction value and the like during printing) of Table 4 is recorded. Also for this information, one character is coded into binary data of eight bits for recording based on the eight-bit ASCII code table shown in Fig. 8.

Here, if, in the process of verifying the finish of the printed photographic paper 232, it is determined to be no good (NG), then reprinting is necessary. However, at this time, by recording the frame number or the correction value of the reprinted image frame 10A on the negative film 10 onto each of the laboratory input areas 66 and 102 of the above-described tracks S2 or T2, the printing apparatus 202 can carry out an optimum reprinting operation by only reading this reprinting information.

The developed negative film 10 and the photographic paper 232 developed after printing are returned to the DPE shop. When the user makes a order again, the information shown in Table 5 is recorded on the DPE input area 34 of the track S1 in the DPE shop and the developed negative film 10 is returned again to the laboratory. For this information, one character is coded into binary data of eight bits for recording based on the eight-bit ASCII code table shown in Fig. 8.

The user can arbitrarily record information regarding items 17, 18 and g through n of Table 2 onto the user input area 112 of the track T2 of each image frame 10A. This recording may be conducted by the operating portion 210 disposed on the camera 200. However, on the camera 200 according to this embodiment, an external input terminal 212 is provided so that the camera 200 may be connected to the personal computer 214 or the electronic pocket notebook 216.

Consequently, the user can enter information from a keyboard of the personal computer 214 or the electronic pocket notebook 216 by connecting the personal computer 214 or the electronic pocket notebook 216 and the camera 200 by means of the connector cable 218. In this case, since, for the general-purpose personal computer 214 or the electronic pocket notebook 216, one byte is formed according to the eight-bit ASCII code so that it may coincide with the code recorded on the negative film 10, it is not necessary to use a converter, but it is possible to directly input the information. Therefore, if the information to be recorded is previously stored into the memory of apparatus such as the personal computer 214 or the electronic pocket notebook 216 in view of the finish of the photographic paper 232, and the information is emitted in synchronism with the conveying of the negative film 10, it is possible to greatly shorten the recording time as compared with the method in which the information entered for each image frame 10A.

In addition, since the recording code of the personal computer 214 or the electronic pocket notebook 216 coincides with the code recorded onto the magnetic recording layer 16 by the camera 200 (eight-bit ASCII code), their compatibility is assured. Therefore, it is not necessary to use the converter for converting the codes, which makes it easy for the user to operate and may simplify the apparatus.

In addition, in the laboratory, a memory card, which is set together with the negative film 10 in order to record the exposure condition and the like, becomes unnecessary, and working efficiency improves. Further, management (for example, reordering and the like) becomes easy in the DPE shop.

Further, although, in this embodiment, the magnetic recording layer 16 is used as the recording portion of the negative film 10, it is also possible to optically record by means of a bar code or the like. Still further, although, in this embodiment, the eight-bit ASCII code is used, the ISO code may also be used.

**Claims**

1.  A photographic film comprising:
    an image portion on which a photographed image is optically recorded; and
    a recording portion for allowing binary coded data to be recorded, said data being represented by an eight-bit code per character.

2.  A photographic film according to Claim 1 wherein said recording portion is a transparent magnetic recording layer.

3.  A photographic film according to Claim 1 wherein said codes is eight-bit ASCII code.

4.  A photographic film according to Claim 2 wherein said magnetic recording layer includes a plurality of tracks running in the longitudinal direction of said photographic film.

5.  A photographic film according to Claim 2 wherein said magnetic recording layer includes at least one first track running in the longitudinal direction of said film at the front end portion of said film where no image is recorded, said first track recording necessary information regarding said film.

6.  A photographic film according to Claim 5 wherein said magnetic recording layer includes at least one second track running in the longitudinal direction of said film for each image at the outer edge portion of each of the recorded images, as viewed in the widthwise direction of the film. said second track recording necessary information regarding each image.

7. A photographic film according to Claim 6 wherein the length of said second track is substantially the same as that of the image, as viewed in the longitudinal direction of the film.

8. A method of recording information regarding a film or an image recorded thereon onto a photographic film comprising a base, an emulsion layer provided on one surface of said base in order to optically record a photographed image and a recording layer provided on the other surface of said base for allowing binary coded data to be recorded, comprising the steps of:
conveying said film; and
writing said information represented by binary data of eight bits per character onto said recording layer while the film is being conveyed.

9. A method according to Claim 8 further comprising the step of coding said information into binary data of eight bits per character prior to said writing step.

10. A method according to Claim 8 wherein said recording layer is a transparent magnetic recording layer.

11. A method according to Claim 10 wherein said magnetic recording layer is provided at least on a portion of said other surface of said base where no image is recorded.

12. A method according to Claim 9 wherein said coding is conducted by means of a general purpose electronic apparatus such as a personal computer or an electronic pocket notebook without using a converter.

13. A method according to Claim 9 wherein said coding is carried out based on an eight-bit ASCII code table.

14. An information I/O system which uses a photographic film on which a photographed image is optically recorded comprising:
a data processing portion provided on a conveying path of said photographic film for carrying out at least one of writing and reading of the data, said photographic film being provided with a recording portion for allowing data coded with an eight-bit code per character to be recorded; and
an external I/O terminal connected to said data processing portion and connectable to an I/O terminal of an electronic apparatus in which the eight-bit code per character is used.

15. An information I/O system according to Claim 14 wherein said information I/O system is equipped in a photographing camera.

16. An information I/O system according to Claim 14 wherein said information I/O system is equipped in a processing apparatus for processing a photographed image.

17. An information I/O system according to Claim 16 wherein said processing apparatus is a photo printing apparatus for printing a developed negative film.

18. An information I/O system according to Claim 14 wherein said recording portion comprises a transparent magnetic recording layer.

19. An information I/O system according to Claim 14 wherein said code is eight-bit ASCII code.

20. An information I/O system according to Claim 14 wherein said electronic apparatus is one of a general-purpose personal computer and an electronic pocket notebook.

FIG. 1

FIG. 2

FIG. 3

EP 0 503 391 A1

# FIG. 4

RUNNING
DIRECTION

60  S2  64          66                                      CLOCK

| CLOCK | S T X | D X | E T X | C R C | ///// | S T X | LABORATORY (INCLUDING REPRINTING) | E T X | C R C E C C | CLOCK |

50 54  56  58  62                                        68    70    52

————————— 50mm —————————

EP 0 503 391 A1

# FIG. 5

T1

RUNNING DIRECTION

| CLOCK | S T X | CAMERA | CAMERA (LIGHT SOURCE INFORMATION) | E T X | C R C E C C | CLOCK |

72  76          78                          80        82   84      74

— 36 mm —

## FIG. 6

RUNNING DIRECTION

EP 0 503 391 A1

# FIG. 7

CLOCK | STX | DATA AREA | ETX | CRC ECC

IB | IB ... IB | IB

3m/m — 2B — S2 — 2B — 20% OF THE DATA AMOUNT

IB

| 1 | 0 | 1 | 1 | 0 | 0 | 1 | 1 |

EP 0 503 391 A1

# FIG. 8

MOST SIGNIFICANT 4 BITS →

LEAST SIGNIFICANT 4 BITS

|    | 0 | 1 | 2 | 3 | 4 | 5 | 6 | 7 | 8 | 9 | A | B | C | D | E | F |
|----|---|---|---|---|---|---|---|---|---|---|---|---|---|---|---|---|
| 0 |   | $D_E$ | . | 0 | @ | P |   | p |   |   |   | ー | タ | ミ | ＝ | ╳ |
| 1 | $S_H$ | $D_1$ | ! | 1 | A | Q | a | q |   |   | 。 | ア | チ | ム | ╪ | 円 |
| 2 | $S_X$ | $D_2$ | " | 2 | B | R | b | r |   |   | 「 | イ | ツ | メ | ╪ | 年 |
| 3 | $E_X$ | $D_3$ | # | 3 | C | S | c | s |   |   | 」 | ウ | テ | モ | ╪ | 月 |
| 4 | $E_T$ | $D_4$ | $ | 4 | D | T | d | t |   |   | 、 | エ | ト | ヤ | ◣ | 日 |
| 5 | $E_Q$ | $N_K$ | % | 5 | E | U | e | u |   |   | ・ | オ | ナ | ユ | ◣ | 時 |
| 6 | $A_K$ | $S_N$ | & | 6 | F | V | f | v |   |   | ヲ | カ | ニ | ヨ | ◣ | 分 |
| 7 | $B_L$ | $E_B$ | ' | 7 | G | W | g | w |   |   | ア | キ | ヌ | ラ | ◢ | 秒 |
| 8 | $B_S$ | $C_N$ | ( | 8 | H | X | h | x |   |   | イ | ク | ネ | リ | ♠ |   |
| 9 | $H_T$ | $E_M$ | ) | 9 | I | Y | i | y |   |   | ウ | ケ | ノ | ル | ♥ |   |
| A | $L_F$ | $S_B$ | * | : | J | Z | j | z |   |   | エ | コ | ハ | レ | ♦ |   |
| B | $H_M$ | $E_C$ | + | ; | K | [ | k | { |   |   | オ | サ | ヒ | ロ | ♣ |   |
| C | $C_L$ | → | , | < | L | ¥ | l | \| |   |   | ヤ | シ | フ | ワ | ● |   |
| D | $C_R$ | ← | − | = | M | ] | m | ⎬ |   |   | ユ | ス | ヘ | ン | ○ |   |
| E | $S_0$ | ↑ | . | > | N | ∧ | n | ~ |   |   | ヨ | セ | ホ | ゛ | ╱ |   |
| F | $S_1$ | ↓ | / | ? | O | _ | o |   |   |   | ッ | ソ | マ | ゜ | ╲ |   |

# FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | DE-A-4 033 561 (MITSUBISHI DENKI KK)<br>* column 7, line 16 - line 21 *<br>--- | 1 | G03C11/02<br>G03B17/24 |
| A | WO-A-9 004 204 (EASTMAN KODAK COMPANY)<br>* abstract *<br>--- | 1-20 | |
| A | RESEARCH DISCLOSURE.<br>no. 224, December 1982, HAVANT GB<br>J.HYND ET AL: 'Optical coding film'<br>* the whole document *<br>--- | 1 | |
| A· | GB-A-2 083 652 (AGFA-GEVAERT AKTIENGESELLSCHAFT)<br>* page 1, right column, line 76 - line 80 *<br>* page 1, right column, line 100 - line 110 *<br>--- | 5 | |
| A | US-A-4 384 771 (N.SAKURADA ET AL)<br>* figure 1 *<br>* column 2, line 38 - line 41 *<br>--- | 14 | |
| D,A | US-A-4 965 627 (GARY L. ROBISON)<br>* the whole document *<br>----- | 1-20 | TECHNICAL FIELDS SEARCHED (Int. Cl.5 )<br><br>G03C<br>G03B |

The present search report has been drawn up for all claims

| Place of search | Date of completion of the search | Examiner |
|---|---|---|
| THE HAGUE | 23 JUNE 1992 | BOLGER W. |

EPO FORM 1503 03.82 (P0401)